# EUROPEAN PATENT SPECIFICATION

(11) **EP 2 521 206 B1**
(45) Date of publication and mention of the grant of the patent: **30.08.2017**
(21) Application number: 12166853.7
(22) Date of filing: 04.05.2012
(51) Int. Cl.: H01M 2/10, H01M 10/42, B25F 3/00, A01D 69/02

(54) **PORTABLE APPARATUS FOR POWERING AND CONTROLLING ELECTRICAL EQUIPMENT, PARTICULARLY FOR AGRICULTURAL USE**
TRAGBARE VORRICHTUNG FÜR STROMVERSORGUNG UND KONTROLLE EINER ELEKTRISCHEN ANLAGE, INSBESONDERE FÜR LANDWIRTSCHAFTLICHE VERWENDUNG
APPAREIL PORTATIF POUR L'ALIMENTATION ET LE CONTRÔLE D'APPAREILLAGE ELECTRIQUE ,EN PARTICULIER POUR UTILISATION AGRICOLE.

(30) Priority: 06.05.2011 IT PD20110144
(43) Date of publication of application: 07.11.2012
(73) Proprietor: Zanon S.R.L., 35011 Campodarsego PD (IT)
(72) Inventor: Zanon, Franco, 35011 Campodarsego PD (IT)
(74) Representative: Modiano, Micaela Nadia

(56) References cited:
- EP-A2- 2 033 742
- US-A- 3 919 615
- US-A1- 2007 019 453
- US-A1- 2007 184 339

## Description

The present invention relates to a portable apparatus for powering and controlling electrical equipment, particularly for agricultural use.

Apparatuses of this type, although designed particularly for agricultural use, can also be employed for other tasks that necessitate the use of devices where no electric power socket is available.

In fact it is known that many portable apparatuses are constituted by a device comprising a particular tool, chosen from among a series of tools as a function of the activity that the user intends to carry out, an electric motor, which actuates such tool, and by a rechargeable battery that supplies the electric current necessary for the operation of the apparatus without a mains socket.

In some known types of apparatus the battery is on board the device (drills, electric screwdrivers etc.), while, in a further configuration, the battery constitutes a separate body which is transportable, for example in adapted backpacks, and is connected to the device by way of electric power supply wires.

For both versions electrical systems are known in which a connection is made from the battery to the device solely for the supply of energy.

For correct operation, however, it would be necessary for the battery to supply power and voltage in accordance with the operating parameters of the device in use. The operating parameters of the batteries and of the devices are in fact different depending on the device that is mounted and, therefore, the parameters of any one single device cannot be used as a reference at design time. Mounting different devices could thus require the use of batteries with different weights and encumbrances.

Moreover, in the event of malfunctioning, very often the user does not have information that would enable him or her to discover the cause and, as a consequence, expensive maintenance is necessary.

According to EPA 2033742A2, such drawbacks have been overcome by developing a multipurpose portable electrical appliance which is characterized by the presence of a communication system that enables an exchange of information regarding the type, condition and operation of the device and of the battery which are connected to each other. This system makes it possible to adapt, if necessary, the operating parameters of the device as a function of the characteristics of the battery connected and/or to adapt the operating parameters of the battery as a function of the operating parameters of the device in use.

The communication system disclosed in the patent comprises a module for controlling and commanding the device, which is constituted by an electronic card configured to transmit information to the battery about the type, status and operation of the device, and a module for controlling and managing the battery, which is constituted by an electronic card configured to transmit information to the device about the type, status and operation of the battery connected.

Moreover, the device contains a code that enables the battery to identify it, while the battery is provided with a system for recognizing such code; similarly, the battery contains a code that enables the device to identify it, while the device is provided with a system for recognizing such code. The recognition systems are activated when the two entities are electrically connected.

Also according to such invention, the communication interface between device and battery can be provided by way of a wired or wireless connection.

An apparatus thus conceived makes it possible to adapt the operation of the two entities thus improving the yield of the apparatus itself. The possibility of using the same battery for any device chosen from among a plurality of devices that are characterized by different operating parameters, and of being able to associate any battery chosen from among a plurality of batteries that have different operating parameters, implies an appreciable reduction of equipment costs as a main advantage.

According to the abovementioned patent, a further advantage of the invention derives from the possibility, by the electronic control system, of storing the information supplied by the device and by the battery and of making it accessible for diagnostics, by sending it to the user in real time.

These apparatuses still exhibit some drawbacks, however.

In fact, the fact that communication between the two entities occurs by way of electronic cards mounted both on the battery and also on the device implies sustaining production and maintenance costs for both of the cards, in addition to their electronic management.

Moreover, for the same reason just given, weight and encumbrance are inevitably increased, contrary to what one would expect for a portable apparatus.

An additional drawback is linked to the system for recharging the battery pack, which is often referred to as BMS (Battery Management System). Often such a system makes use of passive balancing, i.e. it balances the cells of the battery pack with respect to the cell that is most discharged, using resistors to dissipate the excess energy in the higher-charged cells before subsequent recharging. This type of process is not sufficiently reliable however and, since it involves a waste of energy, it is also rather inefficient.

The aim of the present invention is to overcome the above mentioned drawbacks, by providing a portable apparatus with communication systems that are simplified and of reduced weight and encumbrance than the versions already present on the market according to claim 1. Within this aim, an object of the invention is to provide a portable apparatus that can be offered on the market at a competitive cost.

A further object of the invention is to provide a portable apparatus that has lower maintenance costs than the versions already existing.

Another object of the invention is to render the process of recharging the battery pack reliable and efficient.

This aim and these and other objects which will become better apparent hereinafter are achieved by a portable apparatus comprising a device, constituted by an electric motor and by a tool, said device being chosen from among a plurality of different devices with their own operating settings, and by a battery for supplying power to said electric motor that actuates the tool, characterized in that it comprises a communication system which is adapted to allow the unidirectional passage of information from said device to said battery, said communication system being constituted by only one microcontroller, which is provided with an identification means and is coupled to said device, and by an electronic control system, which is coupled to said battery, for identification of the device.

Further characteristics and advantages of the invention will become better apparent from the description of a preferred, but not exclusive, embodiment of the apparatus according to the invention, which is illustrated by way of non-limiting example in the accompanying drawings, wherein:

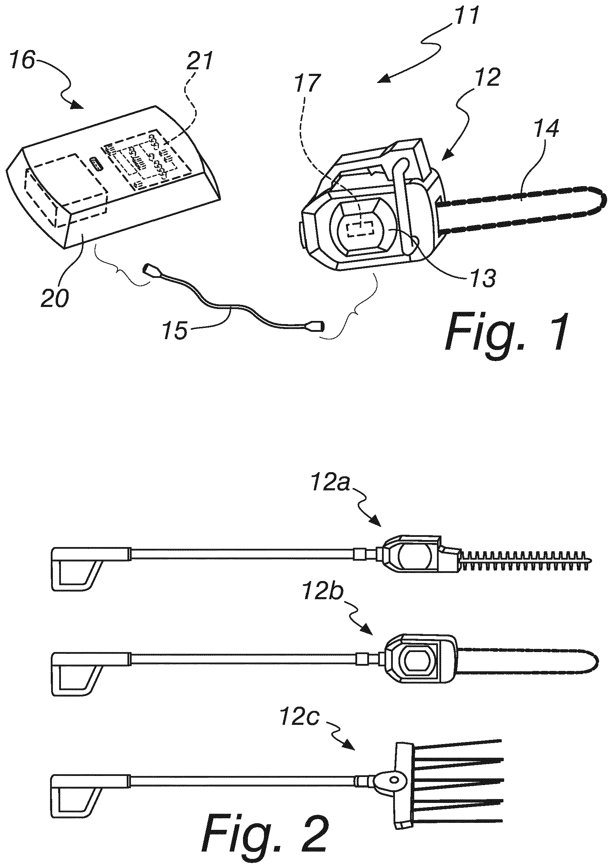

Figure 1 is an exploded perspective view of the apparatus according to the invention;
Figure 2 is a perspective view of some examples of various different devices to which the invention can be applied;

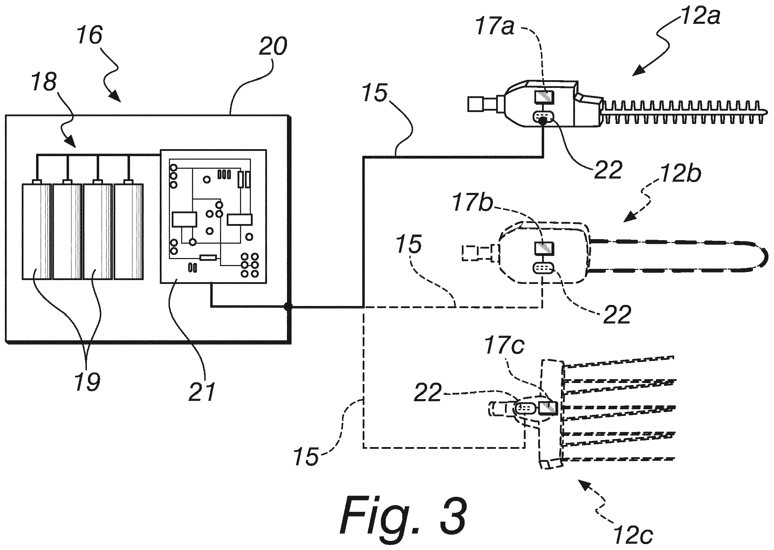

Figure 3 is a simplified diagram of the communication system.

With reference to the figures, the apparatus according to the invention, generally designated by the reference numeral 11, comprises a device 12, which is constituted by a motor 13 and by a tool 14, and connected, by way of the communication and electric power supply cable 15, to the battery 16.

With regards to the needs of the user, the device 12, being represented by way of example by a chainsaw, can be substituted with other devices, such as for example a hedge trimmers 12a, a chain pruner 12b, a beater 12c etc., each one having its own characteristic operating parameters and its own microcontroller 17 with the identification means.

The battery pack 18 is constituted by a certain number of cells 19 and is accommodated in a box-like body 20 in which it is connected to the electronic control system 21 which, in its turn, is connected to one of the devices 12, for example a hedge trimmers 12a, a chain pruner 12b, a beater 12c etc., by way of the communication and power supply cable 15 which is connected to the connector 22 of the device.

The electronic control system 21 has the peculiarity of containing both the logical structure that governs the exchange of information, and also a BMS system with active balancing, which manages the recharging and discharging of the battery pack 18, and an inverter for managing the current.

Operation of the apparatus according to the invention is the following.

The device 12 that is best adapted to the work to be carried out is chosen from among a plurality of different devices 12a, 12b, 12c etc., and is connected to the battery 16 by way of a cable 15 that supplies the electric power to the motor 13 of the device 12 and which connects the two entities 21 and 17 of the communication system. In fact, from the moment the device 12 is connected to the battery 16, the microcontroller 17 is powered and exhibits its identification to the electronic control system 21. In this manner the electronic control system receives information about the type of device connected.

When the microcontroller 17 unidirectionally transmits the data to the battery which uniquely identify the device, it enables the inverter to select the correct operating parameters for the device in use. By way of the inverter, the battery supplies the required power and voltage output as a consequence.

With regard to management of the battery pack, during the recharging process the BMS with active balancing absorbs only the energy from the external power supply that is necessary to complete the recharging of each single cell. It monitors the status of the cells and balances them by withdrawing energy from the more charged cells in order to transfer it to the more discharged ones, thus maintaining the cells at the same charge level.

It should be noted that the electronic control system is entirely digital, rendering the communication system and the system for charging the batteries, managed by the active balancing system, more reliable and flexible.

The active BMS is capable of managing a wide range of types of battery existing on the market, including Li-ion, Ni-Mh, Ni-Cd etc., and the tool can contain one or more electric motors (PMSM, asynchronous three-phase motors, etc.). The device contains only one microcontroller which is provided with identification means. Therefore only the device identifies itself to the battery, but the battery does not identify itself to the device and transmits no data to the device about the battery connected. In this manner the process is driven entirely by the battery.

In practice it has been found that the apparatus according to the invention makes it possible to reduce the weight and encumbrance thanks to the accommodation of the electronic control system entirely in the battery.

Moreover, the integration of the inverter and of the active BMS in the electronic control system makes it possible to reduce production costs and the energy necessary to supply the system.

A further advantage of the apparatus lies in the use of a control system that is entirely digital which, in addition to reducing the end encumbrance thereof, is more reliable and more effective.

Although the apparatus according to the invention is conceived particularly for agricultural use, it can also be employed for other tasks that necessitate the use of devices where no electric power socket is available.

Although the apparatus according to the invention is conceived particularly for agricultural use, it can also be employed for other tasks that necessitate the use of devices where no electric power socket is available.

The apparatus, thus conceived, is susceptible of numerous modifications and variations, all of which are within the scope of the appended claims. Moreover, all the details may be substituted by other, technically equivalent elements.

In practice the materials employed, provided they are compatible with the specific use, as well as the dimensions, may be any according to requirements and to the state of the art.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A portable apparatus (11) for powering and controlling electrical equipment, particularly for agricultural use, comprising a device (12), constituted by an electric motor (13) and by a tool (14), said device (12) being chosen from among a plurality of different devices (12, 12a, 12b, 12c etc.) with their own operating settings, and by a battery (16) for supplying power to said electric motor (13) that actuates the tool (14), **characterized in that** it comprises a unidirectional communication system which is adapted to allow the unidirectional passage of information from said device (12) to said battery (16), said communication system being constituted by only one microcontroller (17), which is provided with an identification means and is coupled to said device (12), and by an electronic control system (21), which is coupled to said battery (16), for identification of the device (12), said electronic control system (21), which is accommodated inside said battery (16), comprising a system for the active control of the charging and discharging process of the cells (19) of the battery pack (18) and an inverter for managing the operating parameters.

2. The apparatus according to claim 1, **characterized in that** said battery (16) can be of a different chemical nature, chosen from the group consisting of Li-ion, Ni-Mh, Ni-Cd batteries and other similar batteries, and constituted by a variable number of cells (19).

3. The apparatus according to the preceding claims, **characterized in that** it comprises a connector (15) which is constituted by conductors for supplying power to said device (12) and by wiring dedicated to the exchange of information between said device (12) and said battery (16).

## Patentansprüche

1. Tragbare Vorrichtung (11) zur Energieversorgung und Steuerung einer elektrischen Ausrüstung, insbesondere für die landwirtschaftliche Verwendung, mit einem aus einer Vielzahl verschiedener Geräte (12, 12a, 12b, 12c, etc.) mit ihren eigenen Betriebseinstellungen ausgewählten Gerät (12), das aus einem elektrischen Motor (13), einem Werkzeug (14) und einer Batterie (16) zum Versorgen des das Werkzeug (14) betätigenden elektrischen Motors (13) mit Energie gebildet ist, **dadurch gekennzeichnet, dass** es ein unidirektionales Kommunikationssystem aufweist, das eingerichtet ist, einen unidirektionalen übergang von Informationen von dem Gerät (12) zu der Batterie (16) zuzulassen, wobei das Kommunikationssystem aus nur einem Mikrokontroller (17), der mit einem Identifikationsmittel ausgestattet und mit dem Gerät (12) gekoppelt ist, und einem elektronischen Steuersystem (21), das mit der Batterie (16) gekoppelt ist, zur Identifikation des Gerätes (12) gebildet ist, das innerhalb der Batterie (16) untergebrachte elektronische Steuersystem (21) weist ein System für die aktive Steuerung des Lade- und Entladevorgangs der Zellen (19) des Batteriepacks (18) und einen Umrichter zum Steuern der Betriebsparameter auf.

2. Vorrichtung nach Anspruch 1, **dadurch gekennzeichnet, dass** die Batterie (16) eine unterschiedliche chemische Beschaffenheit haben kann, gewählt aus der Gruppe bestehend aus Li-Ion-, Ni-Mh-, Ni-Cd-Batterien und anderen ähnlichen Batterien, und durch eine veränderliche Anzahl an Zellen (19) gebildet sein kann.

3. Vorrichtung nach den voranstehenden Ansprüchen, **dadurch gekennzeichnet, dass** sie ein Verbindungsstück (15) aufweist, das aus Leitern zum Zuführen von Energie zu dem Gerät (12) und aus einer Verkabelung zum Austausch von Informationen zwischen dem Gerät (12) und der Batterie (16) gebildet ist.

## Revendications

1. Appareil portable (11) pour alimenter et commander un équipement électrique, en particulier à usage agricole, comprenant un dispositif (12), constitué par un moteur électrique (13) et par un outil (14), ledit dispositif (12) étant choisi parmi une pluralité de dispositifs différents (12, 12a, 12b, 12c, etc.) avec leurs propres réglages de fonctionnement, et par une batterie (16) pour délivrer une alimentation audit moteur électrique (13) qui actionne l'outil (14), **caractérisé en ce qu'**il comprend un système de communication unidirectionnel qui est adapté de façon à permettre le passage unidirectionnel d'information dudit dispositif (12) à ladite batterie (16), ledit système de communication étant constitué par un seul micro-dispositif de commande (17), qui est muni de moyens d'identification et qui est couplé audit dispositif (12), et par un système de commande électronique (21), qui est couplé à ladite batterie (16), pour l'identification du dispositif (12), ledit système de commande électronique (21), qui est reçu à l'intérieur de ladite batterie (16), comprenant un système pour la commande active du processus de charge et de décharge des cellules (19) du bloc de batterie (18) et un onduleur pour gérer les paramètres de fonctionnement.

2. Appareil selon la revendication 1, **caractérisé en ce que** ladite batterie (16) peut être d'une nature chimique différente, choisie parmi le groupe comprenant des batteries Li-ion, Ni-Mh, Ni-Cd et d'autres batteries similaires, et constituée par un nombre variable de cellules (19).

3. Appareil selon les revendications précédentes, **caractérisé en ce qu'**il comprend un connecteur (15) qui est constitué par des conducteurs pour délivrer une alimentation audit dispositif (12) et par un câblage spécialisé pour l'échange d'information entre ledit dispositif (12) et ladite batterie (16).
